# EUROPÄISCHE PATENTSCHRIFT

(11) **EP 3 762 245 B1**
(45) Veröffentlichungstag und Bekanntmachung des Hinweises auf die Patenterteilung: **10.07.2024**
(21) Anmeldenummer: 19718273.6
(22) Anmeldetag: 05.04.2019
(51) Int. Cl.: B60H 1/34, F24F 13/14, B64D 13/00, F24F 13/15

(54) **LUFTAUSSTRÖMER, MODUL UND LUFTAUSSTRÖMERANORDNUNG**
AIR OUTLET, MODULE AND AIR OUTLET ASSEMBLY
DIFFUSEUR D'AIR, MODULE ET ENSEMBLE FORMANT DIFFUSEUR D'AIR

(30) Priorität: 11.04.2018 DE 102018108645; 16.01.2019 DE 102019101034
(43) Veröffentlichungstag der Anmeldung: 13.01.2021
(73) Patentinhaber: Dr. Schneider Kunststoffwerke GmbH, 96317 Kronach Bayern (DE)
(72) Erfinder: MÖCKEL, Tobias, 96224 Burgkunstadt (DE)
(74) Vertreter: Isarpatent
(86) Internationale Anmeldenummer: PCT/EP2019/058670
(87) Internationale Veröffentlichungsnummer: WO 2019/197290

(56) Entgegenhaltungen:
- DE-A1- 3 917 036
- DE-B3- 102015 101 101
- DE-U1- 202014 002 016
- US-A- 2 982 197
- US-A- 4 020 752

## Beschreibung

Es werden ein Luftausströmer, ein Modul zur Verbindung mindestens zweier Luftausströmer und zwei Luftausströmeranordnungen beschrieben.

### Hintergrund

Luftausströmer dienen zur Ablenkung von ausgegebener Luft, die von einer Klimaanlage oder einer anderen Belüftungseinrichtung zur Verfügung gestellt wird. Luftausströmer werden bei Fahrzeugen eingesetzt, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden. Die Menge der zugeführten Luft kann über eine Steuereinrichtung geregelt werden, die bspw. mit einer Bedieneinrichtung zum Verschwenken von Lamellen oder getrennt von einer solchen Bedieneinrichtung neben einer Ausströmöffnung angeordnet ist. Die Menge an zugeführter Luft kann bspw. über Drosseleinrichtungen mit Drosselklappen geregelt werden. Luftausströmer können in einem Fahrzeugarmaturenbrett oder im Bereich der A-, B- oder C- Säule oder am Dach eines Kraftfahrzeuges angeordnet sein.

### Stand der Technik

Konventionelle Luftausströmer sind so aufgebaut, dass diese für einen speziellen Einsatzzweck, zum Beispiel für einen speziellen Fahrzeugtyp, ausgestaltet sind. Es können auch Luftausströmer innerhalb eines Fahrzeugs, beispielsweise entlang eines Fahrzeugarmaturenbretts, verschiedene Ausgestaltungen aufweisen, wobei sich die Luftausströmer hinsichtlich der Form und Ausgestaltung der Gehäuse, der Anzahl an Luftleitelementen sowie der Ausgestaltung von Drosseleinrichtungen und vorderseitig angeordneten Blenden unterscheiden.

Es ist daher erforderlich, für jeden einzelnen Fahrzeugtyp und darüber hinaus für jede Position einen separaten Luftausströmer zu konzipieren. Dadurch entstehen erhebliche Kosten, da die Luftausströmer in geringerer Stückzahl gefertigt werden können und für jeden Anwendungsfall ein separater Luftausströmer konzipiert und gefertigt werden muss.

Der dadurch entstehende Mehraufwand verursacht hohe Kosten und einen enorm hohen Zeitaufwand. Zudem muss für jeden Luftausströmer eine Überprüfung der Ausströmperformance durchgeführt werden.

DE 20 2014 002 016 U1 und DE 39 17 036 A1 offenbaren einen Luftausströmer mit einem Gehäuse mit einer Ausströmöffnung für zugeführte Luft. An die Luftausströmöffnung grenzen gegenüberliegende Seitenwände an, die korrespondierende und komplementäre Verbindungselemente aufweisen. Diese Gestaltung des Luftausströmers erlaubt ein seitliches aneinanderreihen und verbinden mehrerer identischer solcher Luftausströmer zu einer zusammenhängenden Ausströmeranordnung.

US 4 020 752 A und US 2 982 197 A offenbaren einen modularen Luftauslass, bestehend aus einem Rahmen mit Aufnahmeöffnungen für Lamellengitter. Die Lamellengitter können in verschiedenen Richtungen in die Aufnahmeöffnungen des Luftauslasses eingesetzt und darin befestigt werden, um so die Ausströmrichtung der ausströmenden Luft zu beeinflussen.

### Aufgabe

Es besteht demgegenüber die Aufgabe darin eine Lösung anzugeben, welche die Nachteile des Standes der Technik behebt. Zudem soll eine Lösung angegeben werden, welche eine universelle Einsetzbarkeit von Luftausströmern bietet.

### Lösung

Die vorstehend genannte Aufgabe wird durch einen Luftausströmer für Fahrzeuge gemäß Anspruch 1 gelöst, der mindestens ein Gehäuse mit zwei ersten gegenüberliegenden Seitenelementen und zwei zweiten gegenüberliegenden Seitenelementen aufweist,
wobei
- die ersten Seitenelemente und/oder die zweiten Seitenelemente Befestigungselemente aufweisen, über welche die ersten Seitenelemente und die zweiten Seitenelemente zur Ausbildung eines Gehäuses miteinander verbindbar sind,
- an den ersten gegenüberliegenden Seitenelementen mindestens ein erstes Luftleitelement und/oder an den zweiten gegenüberliegenden Seitenelementen mindestens ein zweites Luftleitelement verschwenkbar lagerbar ist, und
- mindestens ein erstes Seitenelement und/oder mindestens ein zweites Seitenelement mindestens einen Verbindungsabschnitt aufweisen, über den der Luftausströmer mit einem ersten Seitenelement und/oder einem zweiten Seitenelement eines weiteren Luftausströmers verbindbar ist.

Es lassen sich daher Luftausströmer herstellen, die aus einer entsprechenden Auswahl an ersten Seitenelementen und zweiten Seitenelementen gefertigt werden, wobei nach Maßgabe der jeweiligen Anforderungen verschiedene Seitenelemente verwendet werden. Diese sind dabei so ausgebildet, dass sie miteinander verbindbar sind, so dass nicht für jeden Gehäusetyp eine Fertigung von speziellen Gehäusen notwendig ist.

Ferner kann hierüber auch eine Anordnung bereitgestellt werden, die zwei miteinander verbundene Luftausströmer oder Gehäuse umfasst, die aus ersten Seitenelementen und zweiten Seitenelementen bestehen. Die Luftausströmer selbst können identisch oder hinsichtlich ihrer Länge oder Breite unterschiedlich ausgebildet sein. Die Gehäuse der Luftausströmer und die weiteren Komponenten der Luftausströmer können in weiteren Ausführungen im Wesentlichen identisch ausgebildet sein, so dass diese Module für eine beliebige Anordnung miteinander darstellen. Dies ermöglicht, die Luftausströmer für verschiedene Anwendungen und Einsatzgebiete zu verwenden. Bspw. können die Luftausströmer für ein Fahrzeugarmaturenbrett nebeneinander angeordnet werden, wobei die Ausrichtung der einzelnen Luftausströmer über die Luftausströmer mit den Verbindungsabschnitten selbst oder die folgend angegebenen Verbindungsmodule erfolgt. Es ist daher möglich, mehrere Luftausströmer nebeneinander in verschiedener Ausrichtung anzuordnen.

Durch die Modulbauweise können gleiche Luftausströmer für verschiedene Fahrzeugtypen und Arten verwendet werden. Durch die Modulbauweise können daher auch Kosten reduziert werden. Die Verwendung identischer Luftausströmer für eine Vielzahl an Fahrzeugen bietet offensichtlich viele Vorteile (bspw. hinsichtlich Bereitstellung, Herstellung, Wartung, Werkzeug, Kosten, Umwelt, etc.).

Es können mehrere Luftausströmer sowohl nebeneinander als auch übereinander angeordnet werden. Auch eine Kombination ist möglich. Dadurch lassen sich verschiedene Ausströmanordnungen realisieren.

Zudem kann vor einer Anordnung mit einer Vielzahl an Luftausströmern eine Blende oder eine andere Einrichtung angeordnet sein, so dass die einzelnen Luftausströmer oder bspw. das Gehäuse nicht sichtbar sind. Dies gilt in gleicher Weise für die Verbindungsmodule, welche versteckt werden können.

Das mindestens eine erste Luftleitelement und/oder das mindesten eine zweite Luftleitelement können so ausgebildet sein, dass diese mit einem ersten Luftleitelement und/oder einem zweiten Luftleitelement eines weiteren Luftausströmers verbindbar sind.

Die Verbindung der Luftleitelemente dient zur Übertragung einer Verschwenkbewegung über die Länge und/oder Höhe einer Anordnung hinweg.

Ein die vorstehend genannte Aufgabe lösendes Verbindungsmodul zur Verbindung mindestens zweier Luftausströmer weist mindestens zwei Verbindungselemente auf, über welche ein erstes Seitenelement oder ein zweites Seitenelement eines ersten Luftausströmers mit einem ersten Seitenelement oder einem zweiten Seitenelement eines zweiten Luftausströmers über die Verbindungsabschnitte verbindbar ist.

Die Verbindungselemente können Wände oder Wandabschnitte sein, welche an den Seitenelementen bzw. den Seitenwänden der Luftausströmer anliegen. Die Verbindungselemente können aber auch Haken oder ähnliches sein, die, wie in den Figuren gezeigt, ein Verbindungsmodul umgreifen oder zwischen sich aufnehmen.

Die zwei Verbindungselemente können parallel zueinander verlaufen oder in einer ersten Richtung und/oder einer zweiten Richtung zueinander geneigt sein.

Der Abstand und/oder die Ausrichtung der zwei Verbindungselemente kann einstellbar und/oder veränderbar sein. Bspw. kann ein Verbindungsmodul verstellbar sein und nach einer Einstellung eine Arretierung erfolgen. Auch kann das Verbindungsmodul flexible Abschnitte aufweisen, so dass bspw. eine Wand oder eine Verbindunsstrebe gestaucht oder gedehnt werden können.

Ein Verbindungsmodul kann eine Antriebseinrichtung aufweisen, die mit den ersten Luftleitelementen und/oder den zweiten Luftleitelementen koppelbar ist. Eine Antriebseinrichtung kann einen elektronischen, elektrischen, elektromechanischen oder mechanischen Antrieb aufweisen. Bspw. können Elektromotoren, Bedienräder, Bedienelemente an einem Luftleitelement etc. vorgesehen sein.

Eine die vorstehend genannte Aufgabe lösende Anordnung weist mindestens zwei Luftausströmer auf, wobei die mindestens zwei Luftausströmer über die Verbindungsabschnitte an ersten Seitenelementen und/oder zweiten Seitenelementen miteinander verbunden sind.

Eine weitere, die vorstehend genannte Aufgabe lösende Anordnung weist mindestens zwei Luftausströmer und mindestens ein Verbindungsmodul auf, wobei erste Seitenelemente und/oder zweite Seitenelemente der mindestens zwei Luftausströmer über das mindestens eine Verbindungsmodul miteinander verbunden sind.

Eine Anordnung kann eine Vielzahl an Luftausströmern und Verbindungsmodulen aufweisen, wobei zwei benachbarte Luftausströmer über ein Verbindungsmodul miteinander verbunden oder verbindbar sind.

Zwischen den ersten Seitenwänden und/oder den zweiten Seitenwänden mindestens zweier benachbarter Luftausströmer kann eine Kupplung angeordnet sein, welche die ersten Luftleitelemente und/oder die zweiten Luftleitelemente der mindestens zwei Luftausströmer miteinander koppelt.

Die Kupplung kann eine Verbindungswelle aufweisen oder durch eine Verbindungswelle gebildet sein.

Die Verbindungswelle kann einen flexiblen Abschnitt aufweisen. Die Verbindungswelle erlaubt daher eine Änderung der Ausrichtung zweier benachbarter Luftausströmer, ohne dass eine besondere Verbindungswelle oder Kupplung erforderlich ist. Die Verbindungswelle oder Kupplung ist daher ebenfalls als Modulbauteil für eine Vielzahl von Anordnungen verwendbar.

Die ersten Luftleitelemente und/oder die zweiten Luftleitelemente können einen Adapter aufweisen, über den die ersten Luftleitelemente und/oder die zweiten Luftleitelemente der mindestens zwei Luftausströmer miteinander und/oder mit der Kupplung oder der Verbindungswelle verbindbar sind. Der Adapter kann bspw. an einem Ende eines Lagerzapfens der Luftleitelemente ausgebildet sein.

Die Kupplung oder die Verbindungswelle können so ausgebildet sein, dass die Verbindung zwischen den ersten Luftleitelementen und/oder den zweiten Luftleitelementen der mindestens zwei Luftausströmer trennbar oder entkoppelbar ist. Das Trennen oder Entkoppeln kann mechanisch und/oder elektrisch bzw. elektronisch gesteuert erfolgen.

Bei der Anordnung kann die Übertragung einer Verschwenkbewegung der Luftleitelemente über sämtliche gekoppelte Luftausströmer hinweg bereitgestellt werden.

Sämtliche Bauteile einer solchen Anordnung von Luftausströmern können als Modulbauteile für verschiedene Anordnungen verwendet werden.

Es können mehrere erste Luftleitelemente und zweite Luftleitelemente vorgesehen sein, die innerhalb eines Luftausströmers miteinander gekoppelt sind.

Zudem können Drosseleinrichtungen, wie bspw. Schließklappen, der einzelnen Luftausströmer miteinander über eine weitere Kupplung oder Verbindungswelle miteinander gekoppelt sein. Zudem kann mindestens ein Antrieb für derartige Drosseleinrichtungen vorgesehen sein.

Die Kopplung von bspw. zweiten Luftleitelementen kann auch über eine weitere Koppeleinrichtung erfolgen, wobei Lagerzapfen der Luftleitelemente einen polygonalen Querschnitt aufweisen und diese Abschnitte der Lagerzapfen in entsprechenden Öffnungen aufgenommen sind, die sich in Bestandteilen der Koppeleinrichtung befinden, so dass eine Übertragung der Bewegung über mindestens zwei Luftausströmer hinweg möglich ist.

Die Luftausströmeranordnung stellt dabei ein System bereit, welches aus einzelnen Seitenelementen und mindestens einem ersten und/oder zweiten Luftleitelement besteht, wobei ein Gehäuse bereitgestellt wird, dass durch Auswahl der entsprechenden Seitenelemente und Luftleitelemente an verschiedene Anforderungen anpassbar ausgebildet ist. Luftleitelemente können bspw. Lamellen oder auch Drosselklappen sein.

Die Luftausströmeranordnung kann zusätzlich eine Blende aufweisen, welche eine Luftaustrittsöffnung des durch die Seitenelemente gebildeten Gehäuses umgibt. Die Blende und die ersten Seitenelemente und/oder die zweiten Seitenelemente weisen weitere korrespondierende Befestigungselemente auf, über welche die Blende mit dem Gehäuse verbindbar ist. Es können daher verschiedenartig ausgebildete Blenden über die entsprechenden Befestigungselemente an dem Gehäuse angebracht werden, sodass die Luftausströmeranordnung an verschiedene Oberflächen oder Größen oder Designs anpassbar ist.

Weiterhin kann eine Luftausströmeranordnung auch eine Drosseleinrichtung mit mindestens einer Drosselklappe aufweisen, die verschwenkbar an den gegenüberliegenden ersten oder zweiten Seitenelementen gelagert ist. Die ersten oder zweiten Seitenelemente weisen hierzu entsprechende Lageröffnungen auf. In die Lageröffnungen können dann verschiedenartige Drosseleinrichtungen eingesetzt werden, die in Abhängigkeit der Konfiguration des Luftausströmers ausgewählt werden.

Die ersten Seitenelemente und/oder die zweiten Seitenelemente können jeweils mindestens eine weitere Lageröffnung aufweisen, über welche das mindestens eine erste Luftleitelement und/oder das mindestens eine zweite Luftleitelement verschwenkbar im Gehäuse gelagert sind.

Die Luftausströmeranordnung kann zusätzlich mindestens eine Antriebs- und Steuereinrichtung zur Steuerung des mindestens einen Luftleitelementes, des mindestens einen zweiten Luftleitelementes und/oder der mindestens einer Drosselklappe aufweisen. Die Luftausströmeranordnung kann für jede Bedienfunktion eine separate Antriebs- und Steuereinrichtung oder eine gemeinsame Antriebs- und Steuereinrichtung aufweisen, welche mindestens zwei Bedienfunktionen zum Verschwenken des mindestens einen ersten Luftleitelementes, des mindestens einen zweiten Luftleitelementes und/oder der mindestens einer Drosselklappe aufweist.

Die Antriebs- und Steuereinrichtung kann eine Hebelanordnung, ein Getriebe, ein Bedienelement, eine mechanische Kopplungseinrichtung zur Kopplung des mindestens einen ersten Luftleitelementes und des mindestens einen zweiten Luftleitelementes und/oder einen Elektromotor aufweisen. Ein Bedienelement kann beispielsweise ein Bedienrad, ein Bedienhebel oder ähnliches sein. Eine Hebelanordnung kann zum Verschwenken von Luftleitelementen und/oder von Drosselklappen dienen. Getriebe können Drehbewegungen übersetzen und mit weiteren Einrichtungen, wie beispielsweise einem Bedienrad oder einem anderen Bedienelement, gekoppelt sein. Mechanische Kopplungseinrichtungen zur Kopplung der Bewegung verschiedener Bedienfunktionen können beispielsweise dazu dienen, um sowohl erste Luftleitelemente als auch zweite Luftleitelemente über ein Bedienelement zu verschwenken. Das eine Bedienelement kann dabei mit einem Elektromotor in Kontakt stehen, sodass über einen einzelnen Elektromotor die Ansteuerung zwei verschiedener Luftleitelemente erreicht werden kann. Eine solche Kopplungseinrichtung kann beispielsweise so ausgebildet sein, wie in dem deutschen Patent DE 10 2015 101 101 B3 der Anmelderin definiert. Die Kopplungseinrichtung kann hierbei auch dazu dienen, um zwei benachbarte Luftausströmeranordnungen mit einer einzelnen Antriebseinheit (zum Beispiel Elektromotor) anzusteuern, wobei die Ansteuerung unabhängig oder auch gemeinsam erfolgen kann. Eine hierfür vorgesehene Antriebseinrichtung zum Verstellen mindestens zweier Luftleitelemente mittels einer Antriebseinheit, wie beispielsweise einem Elektromotor, kann eine Antriebseinheit in Form eines Elektromotors, ein Führungselement, eine Übertragungseinheit und eine Kulissenanordnung mit mehreren Führungsbahnen aufweisen, wobei die Übertragungseinheit mit der Antriebseinheit (Elektromotor) und mit dem Führungselement gekoppelt ist, wobei die Führungsbahnen miteinander verbunden sind und Abschnitte mit Öffnungen aufweisen, in denen Verschiebeglieder eines ersten Verschiebeelementes und eines zweiten Verschiebeelementes verschiebbar aufgenommen sind. Das Führungselement kann entlang den Führungsbahnen gegen die Kraft einer ersten Federeinrichtung verschoben werden, wobei das erste Verschiebeelement mit mindestens einem Luftleitelement und das zweite Verschiebeelement mit mindestens einem zweiten Luftleitelement gekoppelt sind.

Anstelle der Kopplung von Luftleitelementen kann auch die Kopplung von Drosseleinrichtungen erfolgen. Es ist auch möglich, mindestens ein erstes Luftleitelement und mindestens ein zweites Luftleitelement über eine derart ausgebildete Antriebseinrichtung mit einem einzelnen Elektromotor anzusteuern.

Die ersten Seitenelemente, die zweiten Seitenelemente, das mindestens eine erste Luftleitelement, das mindestens eine zweite Luftleitelement, die Blende, die Antriebs- und Steuereinrichtung und/oder die Drosseleinrichtung können aus einer Menge an ersten Seitenelementen, zweiten Seitenelementen, ersten Luftleitelementen, zweiten Luftleitelementen, Blenden, Antriebs- und Steuereinrichtungen und/oder Drosseleinrichtungen auswählbar sein, wobei die einzelnen Komponenten miteinander verbind- und austauschbar sind.

Die Komponenten können sich im Hinblick auf die Länge, Breite, Dicke, Material, Anzahl an Lageröffnungen, Ausbildungen der Antriebs- und Steuereinrichtungen, Ausbildung der Drosseleinrichtungen und/oder der äußeren Gestalt unterscheiden.

Die Luftausströmeranordnung ermöglicht es verschiedene Luftausströmer durch Auswahl von entsprechenden Komponenten bereitzustellen. Gegenüber bekannten Ausbildungen von Luftausströmern besteht der Vorteil darin, dass nicht für verschiedene Gehäuse und Luftausströmertypen jeweils ein komplett neues Konzept entwickelt und bereitgestellt werden muss, sondern das aus einer Vielzahl von verschiedenen Komponenten Luftausströmer in Abhängigkeit der benötigten Ausgestaltungen bereitgestellt werden können. Über die Blenden können dann zusätzlich die optischen Erscheinungsbilder der Luftausströmeranordnungen entsprechend gewählt werden. Die Gehäuse werden aus einer entsprechenden Anzahl an verschiedenen ersten Seitenelementen und zweiten Seitenelementen zusammengesetzt. Die Anzahl der Luftleitelemente kann beliebig gewählt werden, wobei hierfür entsprechende Seitenelemente ausgewählt werden, die eine entsprechende Anzahl an Lageröffnungen für die Luftleitelemente aufweisen. Gleiches gilt für die Antriebs- und Steuereinrichtungen, die entsprechend der gewünschten Ausführung ausgewählt werden. Hierbei kann auf eine Vielzahl von verschiedenen Komponenten zurückgegriffen werden. Beispielsweise können elektromotorische Antriebe und/oder mechanische Antriebe ausgewählt werden. Zudem kann durch die modulartige Ausgestaltung der Komponenten die Anordnung von Bedien- und Antriebseinrichtungen sowohl auf der linken als auch auf der rechten Seite sowie oben oder unten an einem Gehäuse des Luftausströmers erfolgen.

Das Baukastenprinzip der Luftausströmeranordnung sorgt dafür, dass aus einem Umfang an Komponenten Luftausströmer für ein breites Anwendungsgebiet gefertigt werden können. Separat abgestimmte Gehäusetypen und Luftausströmer selbst sind daher nicht mehr erforderlich. Hierüber können der erforderliche Zeitaufwand und Kosten enorm reduziert werden.

Die hierin beschriebene technische Lehre bietet die Möglichkeit, Gehäuse für Luftausströmer sowie Luftausströmer modulartig auszubilden und mindestens zwei Luftausströmer miteinander zu verbinden, wobei ferner im Wesentlichen gleich ausgebildete Luftausströmer für verschiedene Anwendungen verwendet werden können, wobei die Anordnung und Ausrichtung der Luftausströmer zueinander unterschiedlich ist.

Dies wird durch eine Modulbauweise der Luftausströmer erreicht. Die Luftausströmer können hierzu Seitenelemente aufweisen, die miteinander verbindbar sind. Die Verbindung der Luftausströmer kann derart erfolgen, dass die Seitenelemente, die bspw. als Seitenwände ausgebildet sind, direkt aneinander anliegen oder parallel zueinander verlaufen, oder dass die Seitenelemente eine zueinander geneigte Anordnung aufweisen.

Die geneigte Anordnung zueinander kann durch Module erfolgen, die als Verbindungsmodule zwei benachbarte Luftausströmer miteinander verbinden.

Es ist aber auch möglich, die Verbindung der Luftausströmer über Verbindungsabschnitte an den Seitenelementen (erste Seitenelemente und/oder zweite Seitenelemente) durchzuführen.

Die Verbindungabschnitte können in sämtlichen Varianten bspw. Rastelemente, Stifte, Haken, Einstecköffnungen sowie allgemein Verbindungsmittel sein. In weiteren Ausführungen können Seitenwände oder die Seitenelemente selbst als Verbindungsabschnitte dienen.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: verschiedene perspektivische Darstellungen eines modulartig ausgebildeten Luftausströmers nach dem Baukastensystem;
- Fig. 2: perspektivische Darstellungen verschiedener Kupplungen für Luftausströmer nach dem Baukastensystem;
- Fig. 3: eine perspektivische Darstellung einer Luftausströmeranordnung mit zwei Luftausströmern, einem Verbindungsmodul zwischen den Luftausströmern und Dekorleisten nach dem Baukastensystem;
- Fig. 4: eine perspektivische Explosionsdarstellung einer Luftausströmeranordnung mit zwei Luftausströmern, einem Verbindungsmodul zwischen den Luftausströmern und einem Verbindungselement nach dem Baukastensystem;
- Fig. 5: eine perspektivische Darstellung einer Luftausströmeranordnung mit zwei Luftausströmern und einem Verbindungsmodul zwischen den Luftausströmern nach dem Baukastensystem;
- Fig. 6: eine perspektivische Darstellung einer weiteren Luftausströmeranordnung mit zwei Luftausströmern und einem Verbindungsmodul zwischen den Luftausströmern nach dem Baukastensystem;
- Fig. 7: eine perspektivische Darstellung einer noch weiteren Luftausströmeranordnung mit zwei Luftausströmern und einem Verbindungsmodul zwischen den Luftausströmern nach dem Baukastensystem;
- Fig. 8: verschiedene perspektivische Darstellungen einer Luftausströmeranordnung einer noch weiteren Ausführungsform mit zwei Luftausströmern und einem Verbindungsmodul zwischen den Luftausströmern nach dem Baukastensystem;
- Fig. 9: eine perspektivische Explosionsdarstellung einer Luftausströmeranordnung mit zwei Luftausströmern, einem Verbindungsmodul zwischen den Luftausströmern und weiteren Komponenten nach dem Baukastensystem; und
- Fig. 10: eine weitere perspektivische Explosionsdarstellung der Luftausströmeranordnung von Fig. 9.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

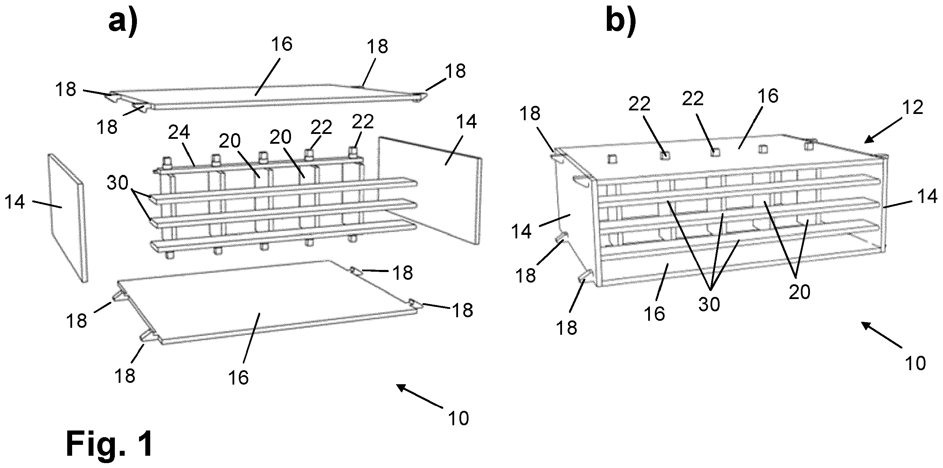

Die Fig. 1 bis 10 zeigen verschiedene Darstellungen und Ansichten von Luftausströmern, Luftausströmeranordnungen und Komponenten dieser Anordnungen sowie der Luftausströmer gem. dem hierin beschriebenen Baukastensystem. Das Baukastensystem für eine Luftausströmeranordnung, die auch nur einen einzelnen Luftausströmer 10, 11 umfassen kann, der mindestens zwei erste Seitenelemente und zwei zweite Seitenelemente aufweist, wobei die Seitenelemente Seitenwände 14, 16 ausbilden, ist dadurch definiert, dass die ersten Seitenelemente und die zweiten Seitenelemente jeweils gegenüberliegend zur Ausbildung eines Gehäuses 12 anordenbar sind. Zudem weisen die ersten Seitenelemente und die zweiten Seitenelemente korrespondierende Befestigungselemente 18 auf, über welche die ersten Seitenelemente mit den zweiten Seitenelementen verbindbar sind. Anstelle der in den Figuren gezeigten Seitenelemente 18, die als Haken ausgebildet sind, können Befestigungselemente 18 auch anderweitig ausgeführt sein. Befestigungselemente können auch durch Befestigungs- oder Anlageflächen gebildet sein. Das Baukastensystem ist ferner dadurch definiert, dass zwischen den gegenüberliegenden ersten Seitenelementen mindestens ein erstes Luftleitelement und/oder zwischen den gegenüberliegenden zweiten Seitenelementen mindestens ein zweites Luftleitelement verschwenkbar anordenbar ist. Zudem umfasst das Baukastensystem zur Auswahl mindestens zwei unterschiedliche erste Seitenelemente und/oder mindestens zwei unterschiedliche zweite Seitenelemente, wobei die ersten Seitenelemente und/oder die zweiten Seitenelemente nach Maßgabe der Anzahl und/oder Gestalt des mindestens einen ersten Luftleitelementes und/oder des mindestens einen zweiten Luftleitelementes sowie den Anforderungen an die Luftausströmer 10, 11 oder die Luftausströmeranordnung 100 auswählbar sind.

Fig. 1 zeigt verschiedene perspektivische Darstellungen eines modulartig ausgebildeten Luftausströmers 10 nach dem Baukastensystem. Fig. 1a) zeigt die einzelnen Komponenten des Gehäuses 12 in einer Explosionsdarstellung sowie die Lamellen 20 und 30, wobei de Lamellen 20 über Mitnehmer 24 miteinander gekoppelt sind. In der gezeigten Ausführungsform von Fig. 1 sind zwischen den Seitenelementen 16 die Lamellen 20 über deren Lagerzapfen 22 verschwenkbar gelagert, wobei hierfür die Seitenwände 16 entsprechende Lageröffnungen ausweisen. Zudem sind die Lamellen 30 zwischen den gegenüberliegenden Seitenwänden 14 gelagert. In der Ausführungsform sind daher sowohl die Lamellen 20, als auch die Lamellen 30 in dem Gehäuse 12 aufgenommen. In weiteren nicht dargestellten Ausführungsformen kann in einem solchen Gehäuse 12 eine Anordnung mit Lamellen 20 oder mit Lamellen 30 und in einem weiteren Gehäuse eine weitere Anordnung von Lamellen 30 oder Lamellen 20 aufgenommen sein, wobei die einzelnen Gehäuse, die dann als Module fungieren, miteinander verbindbar sind. Die Reihenfolge der Anordnung ist dabei nicht vorgegeben, sodass ein Modul mit Lamellen 20 vor oder hinter einem Modul mit Lamellen 30 angeordnet werden kann. Anstelle von Lamellen 20 und 30 können auch andere Luftleitelemente in den entsprechenden Modulen bzw. dem Gehäuse 20 angeordnet werden. Die Verbindung der Module miteinander, wobei hierfür auch ein weiteres Modul für eine Drosseleinrichtung und eine Blende dazuzählen, kann über entsprechende Befestigungselemente erfolgen, die ähnlich zu den Befestigungselementen 18 vorgesehen und ausgebildet sind.

Die Befestigungselemente 18 dienen in der Ausführung von Fig. 1 dazu, die Seitenwände 14 und 16 miteinander zu verbinden. Hierzu weisen in dem Ausführungsbeispiel nur die Seitenwände 16 als Haken ausgebildete Befestigungselemente 18 auf. Die Seitenwände 14 weisen Anlageflächen für die Befestigungselemente 18 auf. Diese Anlageflächen dienen dabei ebenfalls als Befestigungselemente. In weiteren, nicht dargestellten Ausführungsformen können auch die Seitenwände 14 entsprechende Haken oder andere Befestigungselemente aufweisen. Zudem ist die Ausbildung der Befestigungselemente 18 nicht auf die hakenförmige Gestalt beschränkt, wie sie in den Figuren gezeigt ist. Es können auch andere Hakenanordnungen vorgesehen sein.

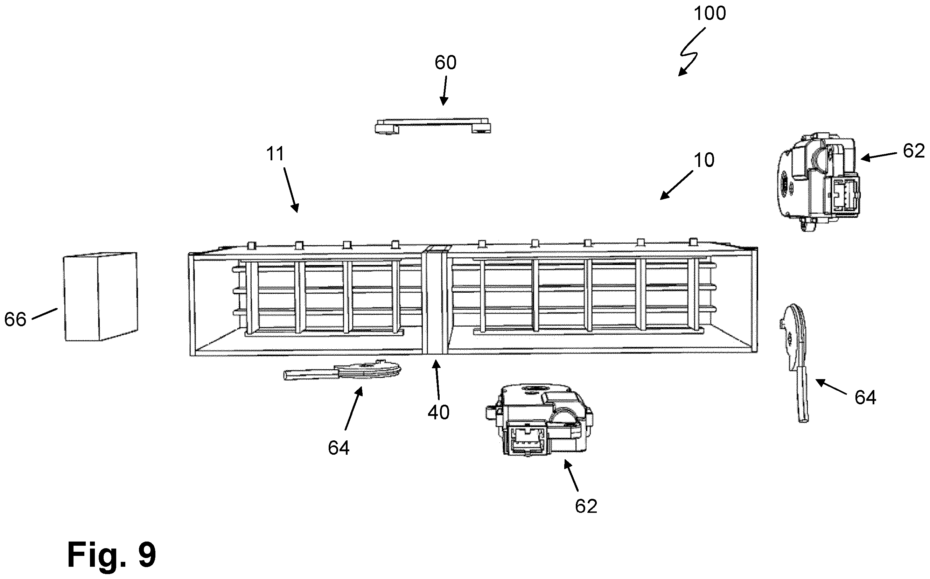

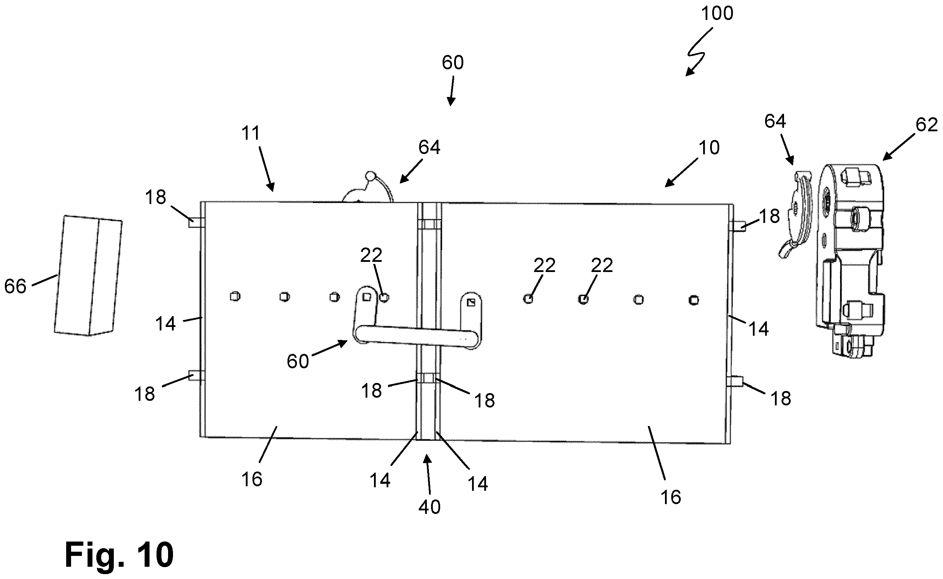

Im Weiteren ist die Darstellung der einzelnen Seitenwände 14 und 16 schematischer Natur. In nicht dargestellten Ausführungsformen können die Seitenwände gekrümmt ausgebildet sein oder gebogene Abschnitte aufweisen. Zudem kann insgesamt die Gestalt der Seitenwände 14 und 16 verschiedenartig sein. Die Seitenelemente 14, 16 können auch versteifende Strukturen aufweisen. Ferner sind Öffnungen für die Lagerzapfen 22 vorgesehen, in denen diese verschwenkbar gelagert sind. Die Lagerzapfen 22 können wie in Fig. 1b schematisch gezeigt, durch die Öffnungen herausragen und einen entsprechenden Abschnitt mit einer Kontur aufweisen. Die Kontur kann durch einen entsprechenden Querschnitt der Lagerzapfen 22 gebildet werden. Hierüber ist es möglich, die Lagerzapfen über ein in Fig. 9 und 10 gezeigtes Übertragungselement 60 miteinander zu koppeln, sodass die Lamellen 20 zweier benachbarter Luftausströmer 10, 11 synchron miteinander verschwenkt werden können. Die Lamellen 22 sind zudem über Koppelstangen so miteinander gekoppelt, dass das Verschwenken einer Lamelle 20 ein synchrones verschwenken der anderen Lamellen 20 bewirkt.

Fig. 1b) zeigt den Luftausströmer 10 im zusammengebauten Zustand der Seitenwände 14 und 16, wodurch ein Gehäuse 12 bereitgestellt wird. Zwischen den gegenüberliegenden Seitenwänden 14 und 16 sind die Lamellen 20 und 30 gelagert.

Die Komponenten des Luftausströmers 10 können aus Kunststoff bestehen und sind daher in einem Spritzgussprozess in hoher Stückzahl kostengünstig und einfach herstellbar. In einem Mehrkomponentenspritzgussverfahren können verschiedene Kunststoffe zu einem Element zusammengefügt oder an ein Element weitere Komponenten mit anderen mechanischen Eigenschaften angefügt werden.

Die Seitenwände 14 und/oder 16 können einen Verbindungsabschnitt aufweisen, der zur Befestigung einer Seitenwand 14, 16 eines Luftausströmers 10, 11 mit einer weiteren Seitenwand 14, 16 eines weiteren Luftausströmers 10, 11 dient. Über diesen Verbindungsabschnitt können zwei Seitenwände 14, 16 benachbarter Luftausströmer 10, 11 direkt miteinander verbunden werden. Es ist aber auch möglich, dass diese Verbindungsabschnitte zusätzlich oder alternativ eine Verbindung mit Verbindungsmodulen 40 ermöglichen, die zur Verbindung der Luftausströmer 10, 11 vorgesehen sind. Die Verbindungsabschnitte können hierzu entsprechend den Befestigungselementen 18 ausgebildete Befestigungselemente aufweisen. In weiteren Ausführungsformen können die Befestigungselemente 18 auch als Befestigungselemente der Verbindungsabschnitte fungieren. Es sei darauf hingewiesen, dass die Befestigungselemente der Verbindungsabschnitte ebenso wie die Befestigungselemente 18 nicht auf die gezeigte Ausführungsform beschränkt sind.

Fig. 1 zeigt ein Ausführungsbeispiel mit einem modulartig ausgebildeten Luftausströmer 10, der Seitenwände 16 aufweist, die zur Lagerung von fünf Lamellen 20 dienen. Soll ein Luftausströmer weniger Lamellen aufweisen, so können anstelle der Seitenwände 16 andere Seitenwände 16 verwendet werden, die entsprechend kürzer oder länger ausgebildet sind. Zudem können anstelle der Seitenwände 14 höhere oder niedrigere bzw. längere oder kürzere Seitenwände 14 verwendet werden. Auch die Tiefe der Seitenwände 14 und 16 kann entsprechend der Ausbildung der Komponenten für eine Luftablenkung und der Gestalt des Gehäuses 12 sowie des Luftausströmers 10, 11 ausgewählt werden. Dabei sind die Befestigungselemente 18 sowie die Seitenwände 14 und 16 derart ausgestaltet, dass die unterschiedlichen Seitenwände 14 und 16 unabhängig von ihrer entsprechenden Länge oder Form miteinander verbindbar sind.

Eine so ausgebildete Basiseinheit kann daher in mehreren Größen und Breiten breitgestellt werden. Insbesondere handelt es sich bei dem Gehäuse 12 und den Lamellen 20 und 30 um einzelne Module, die nicht designabhängig sind und damit die Verwendung für verschiedene Luftausströmer 10, 11 ermöglichen. Insbesondere können die einzelnen Bestandteile, wie beispielsweise die Seitenwände 14, die Seitenwände 16, die Lamellen 20 und die Lamellen 30 als Wiederholteile ausgebildet sein. Ein solcher Luftausströmer 10 mit dem Gehäuse 12 kann beispielsweise in eine Blende, in einen Träger, in eine Schalttafel, in eine Mittelkonsole und so weiter montiert werden. Das Gehäuse 12, das hinter diesen Elementen angeordnet ist, hat keine Auswirkungen auf das Design. Das Design der Luftausströmer wird über die vorgelagerten Blenden bzw. Träger, Schalttafel, Mittelkonsole, usw. festgelegt.

Wie bereits beschrieben können auch mehrere Basismodule, die beispielsweise aus Elementen wie in Fig. 1 gezeigt bestehen, zu einer Basismodulkette zusammengefügt werden. Hierzu kann eine Verbindung der Luftausströmer 10, 11 direkt miteinander oder mithilfe eines Verbindungsmodules (siehe hierzu Verbindungsmodul 40) erfolgen. Die Erweiterung und der Aufbau können je nach Anforderung erfolgen. Insbesondere können Verbindungsmodule für sogenannte H-Lamellen (beispielsweise Lamellen 20) und/oder auch Schließklappen vorgesehen sein.

Diese Verbindungsmodule können beispielsweise als Blende ausgebildet sein, die auf die Vorderseite des Gehäuses 12 montiert werden, sodass über die Blende ein bestimmtes optisches Design erreicht wird. In diesem Designteil, das ebenfalls als Modul ausgebildet ist, können beispielsweise die Lamellen 30 gelagert sein. Bei den Lamellen 30 kann es sich ebenfalls um verschwenkbare oder um feste, nicht verschwenkbare Lamellen 30 handeln. Schließlich kann zwischen einem vorderen Blenden-/Designmodul und dem Gehäuse 12 oder hinter dem Gehäuse 12 ein weiteres Modul mit einer Schließklappenanordnung oder einer anderen Drosseleinrichtung angebracht werden. Die Verbindung der einzelnen Module miteinander kann über weitere Befestigungselemente erfolgen, die an den entsprechenden Modulen vorgesehen sind. Diese Befestigungselemente können analog zu den Befestigungselementen 18 und den Befestigungselementen der Verbindungsabschnitte ausgebildet sein. In weiteren nicht dargestellten Ausführungsformen können einzelne Befestigungselemente der verschiedenen Ausführungen die Funktion für zwei verschiedene oder drei verschiedene Aufgaben übernehmen.

Bei einer Basismodulkette, die eine Luftausströmeranordnung 100 bereitstellt, kann ein Verbindungsmodul 40 ein winkliges Verbindungsmodul sein, sodass zwei benachbarte Luftausströmer 10, 11 eine zueinander verschiedene Ausrichtung aufweisen. Unterschiedlich breite, standardisierte Platzhalter-Verbindungsmodule, die in den Figuren durch das Verbindungsmodul 40 repräsentiert werden, können weitere Elemente aufweisen oder zur Lagerung und Halterung für weitere Elemente dienen. Solche Elemente können beispielsweise eine Uhr, ein Warnblinkschalter, ein Bedienrad usw. sein. Diese Elemente können dann in einer auf die Luftaustrittsöffnung des Gehäuses 12 angeordneten Blende integriert werden.

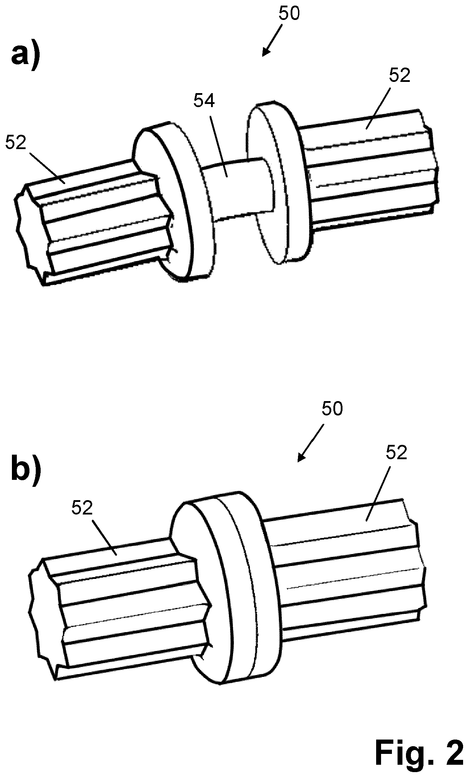

Fig. 2 zeigt perspektivische Darstellungen verschiedener Kupplungen für Luftausströmer 10, 11 nach dem Baukastensystem. Die Kupplungen 50 dienen zur Übertragung der Rotation einer Lamellengruppe mit Lamellen 30 und/oder 20 auf eine weitere Lamellengruppe mit Lamellen 20, 30 eines benachbarten Luftausströmers 10, 11. Zudem dient die Kupplung 50 dazu, die Drehbewegung eines Antriebselements, wie einer Antriebseinheit 62 oder einem Bedienrad 64, auf eine weitere Einheit oder auf eine Gruppe von Lamellen 20, 30 zu übertragen.

Fig. 2a) zeigt die Ausführung einer Kupplung 50 mit zwei Anschlussadaptern 52, die ein sternförmiges Profil aufweisen. Dieses sternförmige Profil greift in eine entsprechende Aufnahme eines Verbindungselementes einer Lamelle 20, einer Lamelle 30, eines Bedienrads 64, einer Antriebseinheit 62 oder einer anderen Einheit. Eine Welle 54 verbindet die beiden Anschlussadapter 52. Die Welle 54 kann insbesondere flexibel ausgebildet sein, sodass eine Übertragung der Rotation möglich ist, wobei die Anschlussadapter 52 eine zueinander verschiedene Ausrichtung aufweisen können. Dies ist insbesondere bei winklig zueinander angeordneten Luftausströmern 10, 11 und/oder hierzu winklig angeordneten Antriebselementen oder weiteren Einheiten vorteilhaft. Insbesondere kann über die Welle 54 ein Winkelausgleich zwischen einzelnen Luftausströmern 10, 11 erreicht werden. Die Welle 54 kann hierzu torsionssteif aber biegeweich sein. Es ist damit ein beidseitiger Anschlussadapter 52 für einen Aktuator oder ein Luftleitelement, wie beispielsweise die Lamellen 20, 30 möglich. Die Länge der Welle 54 kann abhängig vom Design sein. Beispielsweise kann eine Welle 54 eine Uhr, einen Warnblinkschalter, einen Cupholder usw. zwischen zwei benachbarten Luftausströmern 10, 11, beispielsweise hinter einem Verbindungsmodul 40, überbrücken. Die Anschlussadapter 52 können in weiteren nicht gezeigten Ausführungsformen als männlicher oder weiblicher Adapter ausgebildet sein. Die Länge der Welle 54 ist dabei abhängig vom zu überbrückenden Weg. In weiteren Ausführungsformen kann eine Kupplung 50 elektronisch gesteuert sein, sodass ein Trennen und Verbinden von benachbarten Luftausströmern 10, 11 und/oder Antriebseinheiten möglich ist.

Fig. 2b) zeigt eine weitere Ausführung einer Kupplung 50, die als kürzestes Kupplungsteil ausgebildet ist, um beispielsweise den Abstand zwischen zwei benachbarten Luftausströmern 10, 11 möglichst gering zu halten. Dabei können Lamellen 20, 30 direkt aneinander angrenzen.

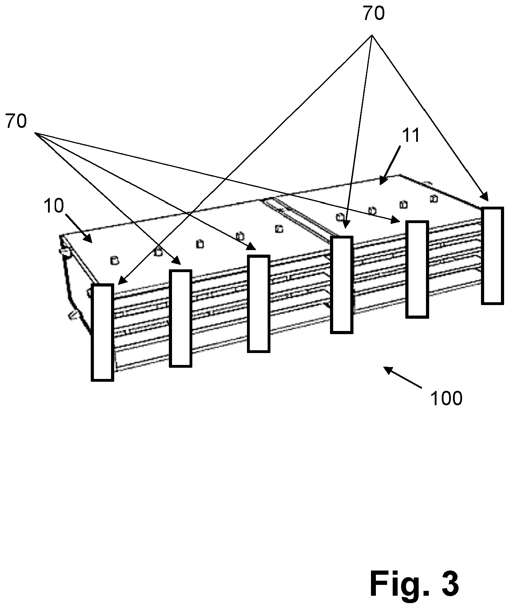

Fig. 3 zeigt eine perspektivische Darstellung einer Luftausströmeranordnung 100 mit zwei Luftausströmern 10, 11, einem Verbindungsmodul 40 zwischen den Luftausströmern 10, 11 und Dekorleisten 70 nach dem Baukastensystem. Die Dekorleisten 70 dienen dazu, Verbindungselemente, wie beispielsweise das Verbindungsmodul 40 und die Seitenwände 14, zu überdecken. Die Dekorleisten 70 können als Dekorstreifen, Blenden oder andere Dekorelemente ausgebildet sein. Die Dekorleisten 70 können designabhängig ausgebildet sein und können darüber hinaus möglicherweise unterschiedliche Abstände bei Luftausströmern 10, 11 oder zwischen Luftausströmern 10, 11 kaschieren. Die Dekorleisten 70 können hierzu Befestigungselemente aufweisen, die eine direkte Anbindung an die Basismodule, also die Gehäuse 12, oder an vorgelagerte Module, wie beispielsweise Blendeneinheiten usw., ermöglichen. Diese Befestigungselemente können analog zu den bereits vorstehend beschriebenen Befestigungselementen ausgebildet sein.

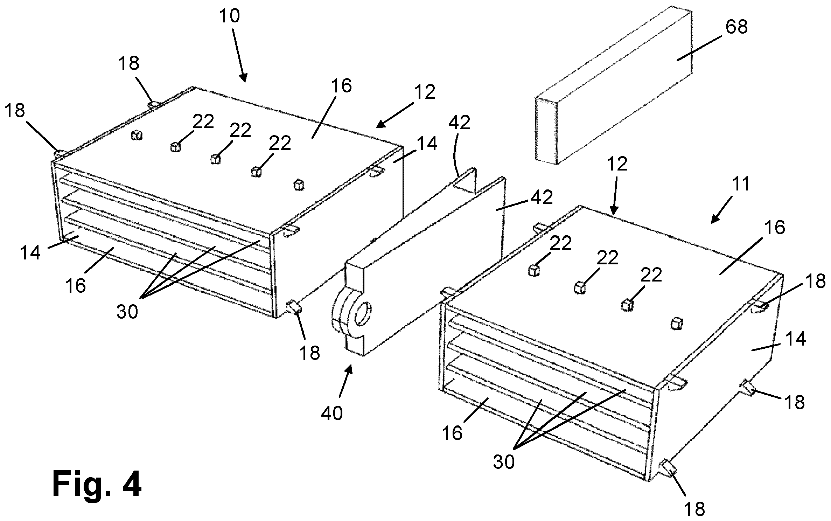

Fig. 4 zeigt eine perspektivische Explosionsdarstellung einer Luftausströmeranordnung 100 mit zwei Luftausströmern 10, 11, einem Verbindungsmodul 40 zwischen den Luftausströmern 10, 11 und einem Verbindungselement 68 nach dem Baukastensystem. Das Verbindungsmodul 40 weist zwei Wände 42 auf, die zueinander geneigt sind, sodass die Ausrichtung der beiden Luftausströmer 10, 11 über das Verbindungsmodul 40 definiert einstellbar ist. Die Verbindung der Luftausströmer 10, 11 bzw. der Gehäuse 12 erfolgt über die Befestigungselemente 18 der Seitenwände 16, die eine Befestigung mit den Wänden 42 bereitstellen. Das Verbindungselement 68 kann zwischen eine Seitenwand 14 und einer Wand 42 oder an eine Seitenwand 14 angebracht werden und über die Befestigungselemente 18 mit den Seitenwänden 14 verbunden werden. Hierzu können auch die Wände 42 Befestigungselemente aufweisen, die analog zu den Befestigungselementen 18 ausgebildet sind, sodass das Verbindungselement 68 direkt mit dem Verbindungsmodul 40 und an der gegenüberliegenden Seite mit einer entsprechenden Wand 14 verbindbar ist. In weiteren nicht dargestellten Ausführungsformen kann auch das Verbindungselement 68 korrespondierende Befestigungselemente 18 aufweisen, die eine Verbindung mit der Wand 42 und der Seitenwand 14 ermöglichen. Das Verbindungselement 68 kann zur Aufnahme eines Aktuators für einen Antrieb der benachbarten Luftausströmer 10, 11 vorgesehen sein. Alternativ kann das Verbindungselement 68 auch als Aktuator verstanden werden, der zum gemeinsamen oder getrennten Ansteuern der einzelnen bewegungsmäßigen Komponenten der Luftausströmer 10, 11 dient.

Mehrere Basismodule können beispielsweise auch über Verbindungsmodule 40 und/oder Verbindungselemente 68 zu einer Basismodulkette zusammengefügt werden, wobei diese Basismodulkette anschließend von einer gesamten Blende für einen Luftausströmer oder dergleichen überspannt wird. Die Blende der Luftausströmeranordnung wird dabei fest mit den Gehäusen 12 verbunden.

Das Verbindungsmodul 40 kann als Kunststoffspritzteil gefertigt werden und ist daher ebenfalls kostengünstig in hoher Stückzahl herstellbar. Das Verbindungsmodul 40 kann an der Vorderseite verschiedene Aufnahmen aufweisen, sodass beispielsweise hierüber eine Uhr, ein Cupholder oder Anzeigesowie Schaltmittel gelagert und getragen werden können. Die Breite und Ausführung der entsprechenden Verbindungsmodule 40 hängt dabei vom jeweiligen Einsatzzweck und dem Design ab. Hierbei können verschiedene Verbindungsmodule 40 bereitgehalten werden, die entsprechend der gewünschten Anforderung und dem Verlauf der Basismodulkette ausgewählt werden.

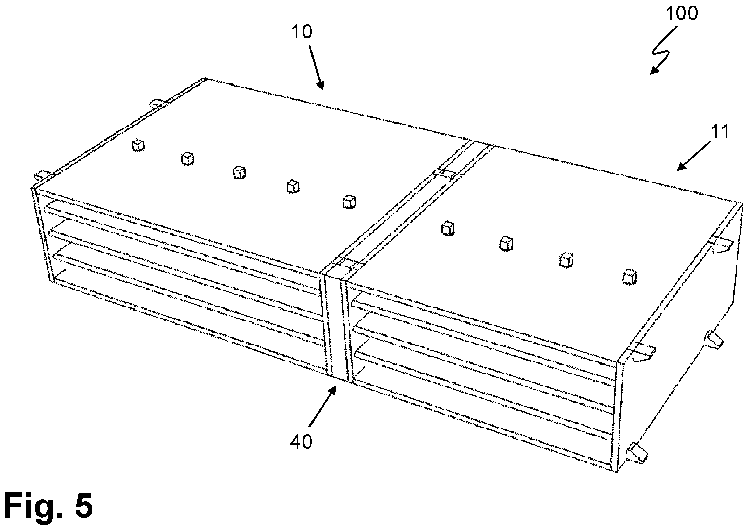

Fig. 5 zeigt eine perspektivische Darstellung einer Luftausströmeranordnung mit zwei Luftausströmern 10, 11 mit einem Verbindungsmodul 40 zwischen den Luftausströmern 10, 11 nach dem Baukastensystem. Fig. 5 zeigt ein Ausführungsbeispiel, wobei die Luftausströmer 10, 11 im Wesentlichen so zueinander angeordnet sind, dass die gegenüberliegenden Seitenwände 14 parallel zueinander verlaufen.

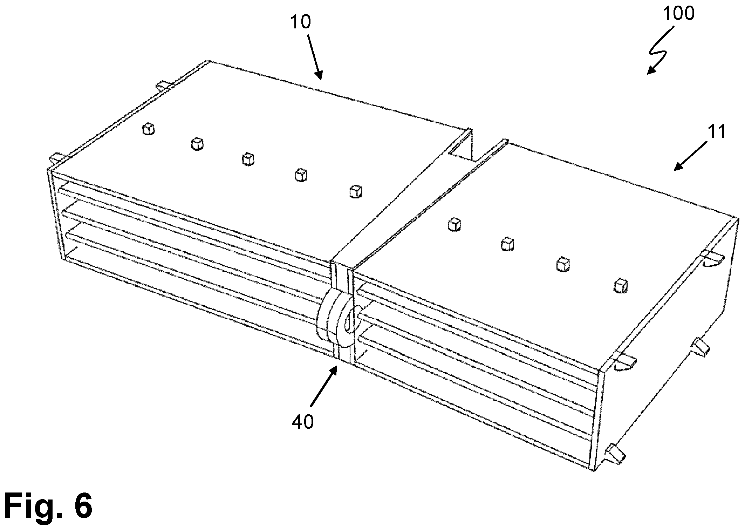

Fig. 6 zeigt ein weiteres Ausführungsbeispiel, wobei die beiden Luftausströmer 10, 11 über ein entsprechend ausgebildetes Verbindungsmodul 40 winklig zueinander angeordnet sind. Hierbei sind die beiden Luftausströmer 10, 11 um eine parallel zu den Schwenkachsen durch die Lagerzapfen 22 verlaufende Achse zueinander geneigt.

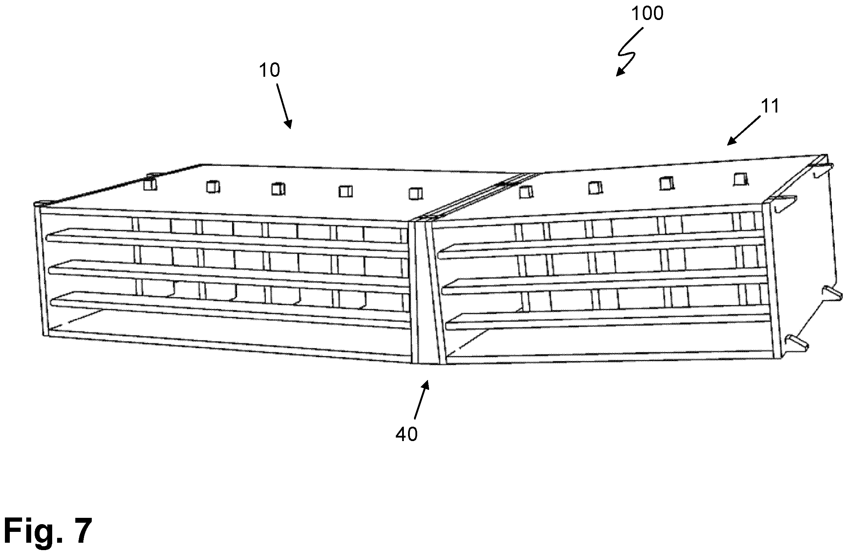

Fig. 7 zeigt noch eine weitere Ausführungsform einer Luftausströmeranordnung 100, wobei die Luftausströmer 10, 11 über ein entsprechendes Verbindungsmodul 40 winklig zueinander angeordnet sind, wobei die Luftausströmer 10, 11 um eine orthogonal zur Schwenkachse durch die Lagerzapfen 22 verlaufende Achse zueinander geneigt sind.

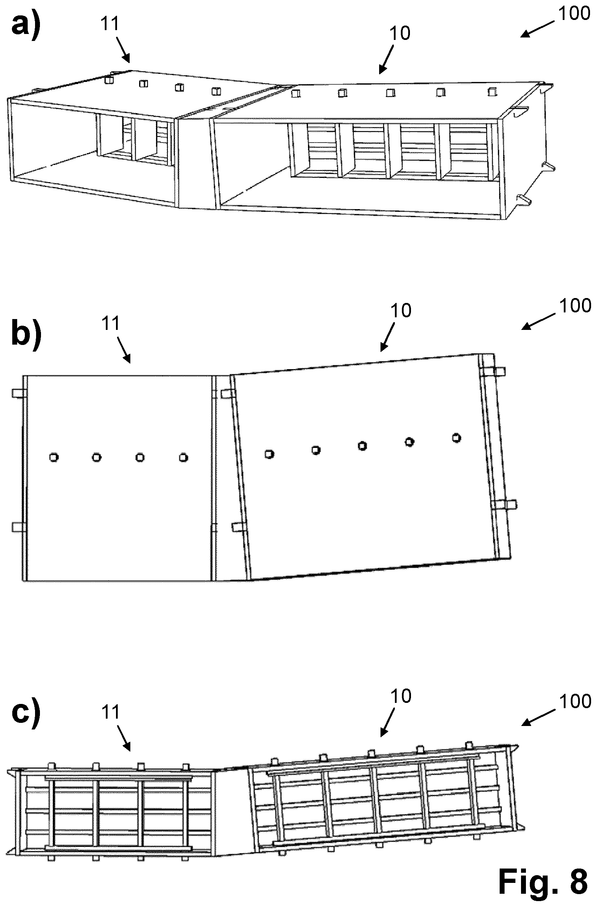

Fig. 8 zeigt verschiedene perspektivische Darstellungen einer Luftausströmeranordnung 100 einer noch weiteren Ausführungsform mit zwei Luftausströmern 10, 11 und einem Verbindungsmodul 40 zwischen den Luftausströmern 10, 11 nach dem Baukastensystem, wobei die Luftausströmer 10, 11 sowohl um eine parallel durch die Schwenkachse der Lamellen 20 über die Lagerzapfen 22 verlaufende Achse als auch um eine orthogonal dazu verlaufende Achse verschwenkt sind.

Fig. 8a) zeigt hierbei eine perspektivische Darstellung auf die Rückseite der Luftausströmer 10, 11, über welche entweder ein weiteres Modul, beispielsweise ein Schließklappenmodul, mit den Gehäusen 12 verbindbar ist, oder direkt ein Luftkanal über entsprechende Befestigungselemente angeschlossen sein kann.

Fig. 8b) zeigt eine Draufsicht auf die Luftausströmeranordnung 100 und Fig. 8c) zeigt eine weitere Ansicht auf die Rückseite der Luftausströmeranordnung 100, welche der Luftaustrittsöffnung gegenüberliegt.

Durch Varianten der Adaptermodule bzw. Verbindungsmodule 40, können mehrere Winkel durch verschiedene Verbindungsmodule 40 und damit Anordnungen der Luftausströmer 10, 11 erreicht werden. Es ist über entsprechende Auswahl der Verbindungsmodule 40 möglich, einer dreidimensionalen Kontur zu folgen, was sich insbesondere zur Bereitstellung von sogenannten Breitbandausströmern, die sich beispielsweise im Wesentlichen über die gesamte Länge eines Armaturenbretts erstrecken können, dienlich ist. Es sind auch gerade, bzw. parallele Ausführungen von Verbindungsmodulen möglich. In weiteren Ausführungsformen können Winkel in vertikaler Ebene (nach oben oder unten geneigt), Winkel in horizontaler Ebene (nach vorne oder hinten geneigt) und/oder freie Winkel (räumlicher Versatz der Anschlussebenen) über entsprechende Verbindungsmodule 40 erreicht werden.

In noch weiteren nicht dargestellten Ausführungsformen sind Varianten der Verbindungsmodule 40 möglich, die einen Winkel- und Toleranzausgleich ermöglichen. Darüber hinaus ist es möglich, über ein Gelenk/Filmscharnier eine Einstellung der Ausrichtung von zwei benachbarten Luftausströmern 10, 11 über ein entsprechend ausgebildetes Verbindungsmodul mit einem derartigen Gelenk zu erreichen. Das Verbindungsmodul 40 kann hierbei auch vorgegebene Raststellungen einnehmen. In noch weiteren Ausführungsformen ist daher eine flexible Entkopplung der Seitenwände 14 möglich.

Es können in weiteren Ausführungsformen zwei feste Seitenwände 14, 16 für einen einzelnen Luftausströmer 10, 11 mit flexiblen Verbindungsmodulen 40, die beispielsweise als Dome zwischen den Seitenwänden 14, 16 ausgebildet sind, vorgesehen werden. Hierüber ist ein frei einstellbarer Versatz der Luftausströmer 10, 11 zueinander möglich.

In weiteren nicht dargestellten Ausführungsformen können Luftausströmer auch über die Seitenwände 16 miteinander verbunden und zu einer Luftausströmeranordnung 100 zusammengefügt werden. Hierzu können ebenfalls entsprechend ausgebildete Verbindungsmodule verwendet werden. In weiteren Ausführungsformen können auch Luftausströmer 10, 11 direkt über deren Seitenwände 16, 14 miteinander verbunden werden. Eine Luftausströmeranordnung 100 kann daher mehrere Luftausströmer 10, 11 aufweisen, die sowohl im Wesentlichen nebeneinander als auch übereinander angeordnet sind.

Wie in den Figuren gezeigt, sind die Luftausströmer 10, 11 unterschiedlich zueinander ausgebildet, wobei der Luftausströmer 10 eine solche Breite aufweist, dass fünf Lamellen 20 im Wesentlichen im gleichen Abstand zueinander darin gelagert werden können. Bei dem Luftausströmer 11 sind lediglich vier Lamellen 20 nebeneinander angeordnet, sodass die Breite des Luftausströmers 11 geringer ist als die Breite des Luftausströmers 10. Jedoch weisen die Luftausströmer 10, 11 identisch ausgebildete Seitenwände 14 auf. Lediglich die Seitenelemente 16 sind unterschiedlich ausgebildet.

Fig. 9 zeigt eine perspektivische Explosionsdarstellung einer Luftausströmeranordnung 100 mit zwei Luftausströmern 10, 11, einem Verbindungsmodul 40 zwischen den Luftausströmern 10, 11 und weiteren Komponenten. Die weiteren Komponenten umfassen ein Übertragungselement 60, das wie im speziellen in Fig. 10 besser dargestellt, Arme mit einer Öffnung aufweist, die dem Querschnitt der Lagerzapfen 22 entsprechen. Die Lagerzapfen 22 können in diesen Öffnungen aufgenommen werden und sind daher drehfest mit den Armen des Übertragungselementes 60 gekoppelt. Die Arme des Übertragungselementes 60 sind über eine Koppelstange miteinander gekoppelt, sodass das Verschwenken der Lamellen 20 eines Luftausströmers 10 automatisch auch ein synchrones Verschwenken der Lamellen 20 des Luftausströmers 11 und umgekehrt bewirkt. Zusätzlich sind Antriebseinheiten 62 und Bedienräder 64 dargestellt, die zum Verschwenken der Lamellen 20 und 30 dienen. Die Antriebseinheiten 62, die als Aktuator ausgebildet sein und einen Elektromotor aufweisen können, wobei eine ferngesteuerte Bedienung möglich ist, können entweder alternativ oder gemeinsam vorgesehen sein. Damit ist es möglich, sowohl über eine elektronische Steuerung die Lamellen 20, 30 zu verschwenken als auch manuell ein Verschenken durchzuführen.

Die Beleuchtungseinheit 66 ist ebenfalls als Modul ausgebildet und kann an eine Seitenwand 14 über entsprechende Befestigungselemente 18 angebracht werden. Durch die modulartige Ausführung ist es möglich, die Beleuchtungseinheit 66 an den Seitenwänden 14 des Luftausströmers 10 oder an den Seitenelementen 14 des Luftausströmers 11 anzubringen. Zudem ist es bei einem entsprechend breit ausgebildeten Verbindungsmodul 40 möglich, die Beleuchtungseinheit 66 zwischen den Seitenwänden 14 der benachbarten Luftausströmer 10, 11 anzuordnen.

Das Übertragungselement 60 kann in verschiedenen Breiten vorliegen, sodass ein Übertragen der Rotation über entsprechend weit oder nah beabstandete Luftausströmer 10, 11 möglich ist.

Die Seitenwände 14, 16 weisen die Befestigungselemente 18 sowie Verbindungsabschnitte mit entsprechenden Befestigungselementen auf, über welche auch die Antriebseinheiten 62 und die Bedienräder 64 angebracht werden können. In noch weiteren Ausführungsformen können die Seitenwände 14, 16 zusätzliche Befestigungselemente aufweisen, die zur Aufnahme der Antriebseinheiten 62 und der Bedienräder 64 dienen, sodass keine speziellen Seitenwände 14, 16 erforderlich sind, sondern je nach gewünschter Ausführung entweder eine Antriebseinheit 62 in Form eines Aktuators mit einem Motor oder ein Bedienrad 64 angebracht werden können. Dementsprechend weisen die Seitenwände 14, 16 auch Koppelstellen auf, wie beispielsweise Durchgangsöffnungen etc., über welche die Lamellen 20, 30 von außerhalb zugänglich sind. Insbesondere können hierzu auch Kupplungen 50 verwendet werden, die in entsprechende Öffnungen der Lamellen 20, 30 eingreifen und mit den Antriebseinheiten 62 oder den Bedienrädern 64 verbindbar sind. Die Fig. 9 und 10 zeigen hierbei schematisch, dass die Antriebseinheiten 62 und die Bedienräder 64 Öffnungen aufweisen, die korrespondierend zu den Anschlussadaptern 52 ausgebildet sind.

Mechanische/elektrische Antriebsmodule (Antriebseinheit 62, Bedienrad 64) können hinzufügbar sein. Über das Übertragungselement 60 ist eine Übertragung der Bewegung möglich. Zudem ist eine Lichtinszenierung möglich und es sind weitere Bedienmodule (wie beispielsweise Bedienräder 64) ansteckbar.

Im Weiteren kann über die Bedienräder 64 ein entsprechendes Verstellen vorgegeben werden, wobei die Bedienräder 64 mit den Antriebseinheiten 62 elektrisch gekoppelt sind, sodass diese ein über die Bedienräder 64 vorgegebenes Verschwenken durch eine entsprechende Ansteuerung ausführen. Daher können die Seitenwände 14, 16 auch so ausgebildet sein, dass sowohl Antriebseinheiten 62 als auch Bedienräder 54 angeordnet werden können.

Die Ausführung der Verbindungsmodule 40 ist entsprechend den Anforderungen auswählbar. Es können dabei auch äußerst flache Verbindungsmodule 40 verwendet werden, sodass Lamellen direkt aneinander angrenzen können.

In weiteren Ausführungsformen können auch Antriebs- und Steuereinrichtungen zur Steuerung der Lamellen 20, 30, einer Drosselklappe oder anderer Elemente vorgesehen sein. Die Antriebs- und Steuereinrichtungen können eine Hebelanordnung, ein Getriebe, ein Bedienelement, eine mechanische Kopplungseinrichtung zur Kopplung der Lamellen 20 und 30 und/oder einen Elektromotor aufweisen. Insbesondere können die Lamellen 20, die Lamellen 30, eine Blende, ein Blendenmodul, eine Antriebs- und Steuereinrichtung und/oder eine Drosseleinrichtung sowie ein Drosselmodul aus mindestens zwei ersten Lamellen 20, zwei zweiten Lamellen 30, zwei Blenden oder Blendenmodulen, zwei Antriebs- und Steuereinrichtungen und/oder zwei Drosseleinrichtungen auswählbar sein, wobei die einzelnen Komponenten miteinander verbind- und austauschbar sind.

Die Komponenten können sich im Hinblick auf die Länge, Breite, Dicke, Material, Anzahl an Lageröffnungen, Ausbildung der Antriebs- und Steuereinrichtung, Ausbildung der Drosseleinrichtungen und/oder der äußeren Gestalt unterscheiden.

Im Weiteren kann der Abstand und/oder die Ausrichtung zweier Seitenwände 14, 16, die über ein Verbindungsmodul 40 miteinander verbunden sind, einstellbar und/oder veränderbar sein. Dabei können insbesondere die Wände 42 in ihrer Ausrichtung und im Abstand einstellbar und/oder veränderbar sein.

Das Baukastensystem ermöglicht es Luftausströmer 10, 11 sowie Luftausströmeranordnungen 100 bereitzustellen, wobei einzelne Module gefertigt werden können, die miteinander verbindbar sind.

### Bezugszeichenliste

- 10: Luftausströmer
- 11: Luftausströmer
- 12: Gehäuse
- 14: Seitenwand
- 16: Seitenwand
- 18: Befestigungselement
- 20: Lamelle
- 22: Lagerzapfen
- 24: Mitnehmer
- 30: Lamelle
- 40: Verbindungsmodul
- 42: Wand
- 50: Kupplung
- 52: Anschlussadapter
- 54: Welle
- 60: Übertragungselement
- 62: Antriebseinheit
- 64: Bedienrad
- 66: Beleuchtungseinheit
- 68: Verbindungselement
- 70: Dekorleiste
- 100: Luftausströmeranordnung

## Patentansprüche

1. Luftausströmer für Fahrzeuge, mindestens aufweisend ein Gehäuse (12) mit zwei ersten gegenüberliegenden Seitenelementen und zwei zweiten gegenüberliegenden Seitenelementen, wobei
- die ersten Seitenelemente und/oder die zweiten Seitenelemente Befestigungselemente (18) aufweisen, über welche die ersten Seitenelemente und die zweiten Seitenelemente zur Ausbildung eines Gehäuses (12) miteinander verbindbar sind,
- an den ersten gegenüberliegenden Seitenelementen mindestens ein erstes Luftleitelement und/oder an den zweiten gegenüberliegenden Seitenelementen mindestens ein zweites Luftleitelement verschwenkbar lagerbar ist, und
- mindestens ein erstes Seitenelement und/oder mindestens ein zweites Seitenelement mindestens einen Verbindungsabschnitt aufweisen, über den der Luftausströmer (10; 11) mit einem ersten Seitenelement und/oder einem zweiten Seitenelement eines weiteren Luftausströmers (11; 10) verbindbar ist.

2. Luftausströmer nach Anspruch 1, wobei das mindestens eine erste Luftleitelement und/oder das mindesten eine zweite Luftleitelement so ausgebildet sind, dass diese mit einem ersten Luftleitelement und/oder einem zweiten Luftleitelement eines weiteren Luftausströmers (10; 11) verbindbar sind.

3. Verbindungsmodul zur Verbindung mindestens zweier Luftausströmer (10; 11) nach Anspruch 1 oder 2, mindestens aufweisend zwei Verbindungselemente, über welche ein erstes Seitenelement oder ein zweites Seitenelement eines ersten Luftausströmers (10; 11) mit einem ersten Seitenelement oder einem zweiten Seitenelement eines zweiten Luftausströmers (10; 11) über die Verbindungsabschnitte verbindbar sind.

4. Verbindungsmodul nach Anspruch 3, wobei die zwei Verbindungselemente parallel oder in einer ersten Richtung und/oder einer zweiten Richtung zueinander geneigt sind.

5. Verbindungsmodul nach Anspruch 3 oder 4, wobei der Abstand und/oder die Ausrichtung der zwei Verbindungselemente einstellbar und/oder veränderbar ist.

6. Verbindungsmodul nach einem der Ansprüche 3 bis 5, aufweisend eine Antriebseinrichtung, die mit den ersten Luftleitelementen und/oder den zweiten Luftleitelementen koppelbar ist.

7. Anordnung, aufweisend mindestens zwei Luftausströmer (10; 11) nach Anspruch 1 oder 2, wobei die mindestens zwei Luftausströmer (10; 11) über die Verbindungsabschnitte an ersten Seitenelementen und/oder zweiten Seitenelementen miteinander verbunden sind.

8. Anordnung, aufweisend mindestens zwei Luftausströmer (10; 11) nach Anspruch 1 oder 2 und mindestens ein Verbindungsmodul (40) nach einem der Ansprüche 3 bis 6, wobei erste Seitenelemente und/oder zweite Seitenelemente der mindestens zwei Luftausströmer (10; 11) über das mindestens eine Verbindungsmodul (40) miteinander verbunden sind.

9. Anordnung nach Anspruch 7 oder 8, wobei zwischen den ersten Seitenwänden und/oder den zweiten Seitenwänden mindestens zweier benachbarter Luftausströmer (10; 11) eine Kupplung (50) angeordnet ist, welche die ersten Luftleitelemente und/oder die zweiten Luftleitelemente der mindestens zwei Luftausströmer (10; 11) miteinander koppelt.

10. Anordnung nach Anspruch 9, wobei die Kupplung (50) eine Verbindungswelle aufweist oder durch eine Verbindungswelle gebildet ist.

11. Anordnung nach Anspruch 10, wobei die Verbindungswelle einen flexiblen Abschnitt aufweist.

12. Anordnung nach Anspruch 7, 9, 10 oder 11, wobei die ersten Luftleitelemente und/oder die zweiten Luftleitelemente einen Adapter aufweisen, über den die ersten Luftleitelemente und/oder die zweiten Luftleitelemente der mindestens zwei Luftausströmer (10; 11) miteinander und/oder mit der Kupplung (50) oder der Verbindungswelle verbindbar sind.

13. Anordnung nach einem der Ansprüche 9 bis 12, wobei die Kupplung (50) oder die Verbindungswelle so ausgebildet sind, dass die Verbindung zwischen den ersten Luftleitelementen und/oder den zweiten Luftleitelementen der mindestens zwei Luftausströmer (10; 11) trennbar ist.

## Claims

1. An air outlet for vehicles, at least comprising a housing (12) with two first opposing side elements and two second opposing side elements,
wherein
- the first side elements and/or the second side elements have fastening elements (18) by which means the first side elements and the second side elements can be connected to one another to form a housing (12),
- at least one first air control element can be mounted in a pivotable manner on the first opposing side element and/or at least one second air control element can be mounted in a pivotable manner on the second opposing side element, and
- at least one first side element and/or at least one second side element have at least one connecting section by which means the air outlet (10; 11) can be connected to a first side element and/or a second side element of a further air outlet (11; 10).

2. An air outlet according to claim 1, wherein the at least one first air control element and/or the at least one second air control element are designed such that they can be connected to a first air control element and/or a
second air control element of a further air outlet (10; 11).

3. A connecting module for connecting at least two air outlets (10; 11) according to claim 1 or 2, at least comprising two connecting elements by which means a first side element or a second side element of a first air outlet (10; 11) can be connected to a first side element or a second side element of a second air outlet (10; 11) by means of the connecting sections.

4. A connecting module according to claim 3, wherein the two connecting elements are parallel or inclined towards each other in a first direction and/or a second direction.

5. A connecting module according to claim 3 or 4,
wherein the spacing and/or alignment of the two connecting elements is adjustable and/or changeable.

6. A connecting module according to one of claims 3 to 5 comprising a drive device which can be coupled to the first air control elements and/or the second air control elements.

7. An arrangement comprising at least two air outlets (10; 11) according to claim 1 or 2, wherein the at least two air outlets (10; 11) are connected to one another by means of the connecting sections on first side elements and/or second side elements.

8. An arrangement comprising at least two air outlets (10; 11) according to claim 1 or 2 and at least one connecting module (40) according to one of claims 3 to 6, wherein first side elements and/or second side elements of the at least two air outlets (10; 11) are connected to one another by means of the at least one connecting module (40).

9. An arrangement according to claim 7 or 8, wherein a coupling (50) is arranged between the first side walls and/or the second side walls of at least two adjacent air outlets (10; 11), which coupling links the first air control elements and/or the second air control elements of the at least two air outlets (10; 11) to one another.

10. An arrangement according to claim 9, wherein the coupling (50) has a connecting shaft or is formed by a connecting shaft.

11. An arrangement according to claim 10, wherein
the connecting shaft has a flexible section.

12. An arrangement according to claim 7, 9, 10 or 11, wherein the first air control elements and/or the second air control elements have an adapter by which means the first air control elements and/or the second air control elements of the at least two air outlets (10; 11) can be connected to one another and/or to the coupling (50) or the connecting shaft.

13. An arrangement according to one of claims 9 to 12, wherein the coupling (50) or the connecting shaft is designed such that the connection between the first air control elements and/or the second air control elements of the at least two air outlets (10; 11) is separable.

## Revendications

1. Diffuseur d'air pour véhicules, comprenant au moins un boîtier (12) avec deux premiers éléments latéraux opposés et deux seconds éléments latéraux opposés, dans lequel
- les premiers éléments latéraux et/ou les seconds éléments latéraux comprennent des éléments de fixation (18), par l'intermédiaire desquels les premiers éléments latéraux et les seconds éléments latéraux peuvent être reliés les uns aux autres pour la formation d'un boîtier (12),
- au niveau des premiers éléments latéraux opposés au moins un premier élément déflecteur d'air et/ou au niveau des seconds éléments latéraux opposés au moins un second élément déflecteur d'air peut être monté de manière à pivoter, et
- au moins un premier élément latéral et/ou au moins un second élément latéral comprennent au moins un tronçon de liaison, par l'intermédiaire duquel le diffuseur d'air (10 ; 11) peut être relié à un premier élément latéral et/ou un second élément latéral d'un autre diffuseur d'air (11 ; 10).

2. Diffuseur d'air selon la revendication 1, dans lequel l'au moins un premier élément déflecteur d'air et/ou l'au moins un second élément déflecteur d'air sont formés de telle sorte que ceux-ci peuvent être reliés à un premier élément déflecteur d'air et/ou un second élément déflecteur d'air d'un autre diffuseur d'air (10 ; 11).

3. Module de liaison pour la liaison d'au moins deux diffuseurs d'air (10 ; 11) selon la revendication 1 ou 2, comprenant au moins deux éléments de liaison, par l'intermédiaire desquels un premier élément latéral ou un second élément latéral d'un premier diffuseur d'air (10 ; 11) peuvent être reliés à un premier élément latéral ou un second élément latéral d'un second diffuseur d'air (10 ; 11) par l'intermédiaire des tronçons de liaison.

4. Module de liaison selon la revendication 3, dans lequel les deux éléments de liaison sont inclinés parallèlement ou dans une première direction et/ou dans une seconde direction l'un par rapport à l'autre.

5. Module de liaison selon la revendication 3 ou 4, dans lequel la distance et/ou l'orientation de deux éléments de liaison peut être réglée et/ou modifiée.

6. Module de liaison selon l'une des revendication 3 à 5, comprenant un dispositif d'entraînement, lequel peut être accouplé aux premiers éléments déflecteurs d'air et/ou aux seconds éléments déflecteurs d'air.

7. Ensemble, comprenant au moins deux diffuseurs d'air (10 ; 11) selon la revendication 1 ou 2, dans lequel les au moins deux diffuseurs d'air (10 ; 11) sont reliés l'un à l'autre par l'intermédiaire des tronçons de liaison au niveau des premiers éléments latéraux et/ou seconds éléments latéraux.

8. Ensemble, comprenant au moins deux diffuseurs d'air (10 ; 11) selon la revendication 1 ou 2 et au moins un module de liaison (40) selon l'une quelconque des revendications 3 à 6, dans lequel les premiers éléments latéraux et/ou seconds éléments latéraux des au moins deux diffuseurs d'air (10 ; 11) sont reliés l'un à l'autre par l'intermédiaire de l'au moins un module de liaison (40).

9. Ensemble selon la revendication 7 ou 8, dans lequel entre les premières parois latérales et/ou les secondes parois latérales d'au moins deux diffuseurs d'air (10 ; 11) un accouplement (50) est disposé, lequel accouple l'un à l'autre les premiers éléments déflecteurs d'air et/ou les seconds éléments déflecteurs d'air des au moins deux diffuseurs d'air (10 ; 11).

10. Ensemble selon la revendication 9, dans lequel l'accouplement (50) comprend un arbre de liaison ou par l'intermédiaire duquel on forme un arbre de liaison.

11. Ensemble selon la revendication 10, dans lequel l'arbre de liaison comprend un tronçon flexible.

12. Ensemble selon la revendication 7, 9, 10 ou 11, dans lequel les premiers éléments déflecteurs d'air et/ou les seconds éléments déflecteurs d'air comprennent un adaptateur, par l'intermédiaire duquel les premiers éléments déflecteurs d'air et/ou les seconds éléments déflecteurs d'air des au moins deux diffuseurs d'air (10 ; 11) peuvent être reliés l'un à l'autre et/ou à l'accouplement (50) ou l'arbre de liaison.

13. Ensemble selon l'une quelconque des revendications 9 à 12, dans lequel l'accouplement (50) ou l'arbre de liaison sont formés de telle sorte que la liaison entre les premiers éléments déflecteurs d'air et/ou les seconds éléments déflecteurs d'air des au moins deux déflecteurs d'air (10 ; 11) est séparable.
